# EUROPEAN PATENT APPLICATION

(11) **EP 4 596 302 A1**
(43) Date of publication of application: **06.08.2025**
(21) Application number: 25153714.8
(22) Date of filing: 24.01.2025
(51) Int. Cl.: B60L 50/64, B60L 58/26, H01M 10/613, H01M 10/617, H01M 10/625, H01M 10/655, H01M 10/6552, H01M 10/6553, H01M 50/249, H01M 10/42, H02B 1/24, H02B 1/46, H02B 1/48, H02B 1/56, B60R 16/02

(54) **DISTRIBUTION BOX, BATTERY PACK, AND VEHICLE**

(30) Priority: 31.01.2024 CN 202420242382 U
(71) Applicant: BYD Company Limited, Shenzhen, Guangdong 518118 (CN)
(72) Inventor: ZHONG, Nianhua, Shenzhen, 518118 (CN); E, Congji, Shenzhen, 518118 (CN)
(74) Representative: Mathys & Squire

(57) **Abstract**

A distribution box, a battery pack, and a vehicle. The distribution box includes a box body, a positive circuit, a negative circuit, a circuit breaker, and a heat dissipation apparatus. The positive circuit is arranged inside the box body. The positive circuit includes a first conductive connection member and a second conductive connection member. The negative circuit is arranged inside the box body. The negative circuit includes a third conductive connection member and a fourth conductive connection member. A first positive terminal of the circuit breaker is connected with an end of the first conductive connection member. A second positive terminal of the circuit breaker is connected with an end of the second conductive connection member. A first negative terminal of the circuit breaker is connected with an end of the third conductive connection member. A second negative terminal of the circuit breaker is connected with an end of the fourth conductive connection member. The heat dissipation apparatus is arranged at a heat dissipation opening of the box body. In the distribution box of the present disclosure, the circuit breaker is used, which reduces a quantity of components and devices in the distribution box and reduces manufacturing costs. Through use of the heat dissipation apparatus, heat dissipation of the components and devices in the distribution box can be accelerated through the heat dissipation opening, thereby increasing a service life of the components and devices.

## Description

### FIELD

The present disclosure relates to the field of batteries, and more specifically, to a distribution box, a battery pack, and a vehicle.

### BACKGROUND

In a distribution box of a battery pack, multiple high voltage components and devices are arranged in a plastic housing, and the high voltage components and devices are connected by a metal conductor to form a circuit. With increasing requirements of users for a long mile range and a high power of an electric vehicle, a voltage and a current in a high voltage circuit of the distribution box are increasingly high, leading to a need for high voltage devices with large specifications. However, a small space in the distribution box is not conducive to heat dissipation. Heat generated caused by operation of components and devices such as a relay and a fuse in the related art can only be dissipated through a heat dissipation hole on a housing of the distribution box. The manner has low heat dissipation efficiency, which easily causes overheating of a device and shortens a service life of the high voltage component.

### SUMMARY

To resolve at least one of the above problems, the present disclosure is provided. According to a first aspect of the present disclosure, a distribution box is provided. The distribution box includes a box body, a positive circuit, a negative circuit, a circuit breaker, and a heat dissipation apparatus. The positive circuit is arranged inside the box body. The positive circuit includes a first conductive connection member and a second conductive connection member. The negative circuit is arranged inside the box body. The negative circuit includes a third conductive connection member and a fourth conductive connection member. A first positive terminal of the circuit breaker is connected with an end of the first conductive connection member. A second positive terminal of the circuit breaker is connected with an end of the second conductive connection member. A first negative terminal of the circuit breaker is connected with an end of the third conductive connection member. A second negative terminal of the circuit breaker is connected with an end of the fourth conductive connection member. The heat dissipation apparatus is arranged at a heat dissipation opening of the box body. The heat dissipation opening is provided on a side of the box body corresponding to positions where the circuit breaker is connected to the positive circuit and the negative circuit.

In an embodiment of the present disclosure, the heat dissipation apparatus includes a first thermally conductive adhesive and a heat dissipation module. A first side surface of the first thermally conductive adhesive is thermally connected with the first conductive connection member, the second conductive connection member, the third conductive connection member, and the fourth conductive connection member. A second side surface of the first thermally conductive adhesive is thermally connected with the heat dissipation module.

In an embodiment of the present disclosure, the heat dissipation module includes a semiconductor chilling plate and a heat dissipation sheet. The second side surface of the first thermally conductive adhesive is thermally connected with a first side surface of the semiconductor chilling plate. A second side surface of the semiconductor chilling plate is thermally connected with the heat dissipation sheet.

In an embodiment of the present disclosure, the heat dissipation module further includes a second thermally conductive adhesive. The second thermally conductive adhesive is fixed between the semiconductor chilling plate and the heat dissipation sheet.

In an embodiment of the present disclosure, the distribution box further includes a temperature sensor and a battery management system (BMS). The temperature sensor is arranged on a surface of the first conductive connection member, and is configured to collect a temperature of the first conductive connection member. The BMS is connected with the temperature sensor and the semiconductor chilling plate, and is configured to control on/off of a current in the semiconductor chilling plate based on a collection result of the temperature sensor.

In an embodiment of the present disclosure, the semiconductor chilling plate and the heat dissipation sheet are fixed to an outer side of the box body through bolts.

In an embodiment of the present disclosure, the heat dissipation module is one of a liquid cooling plate and a phase change material.

In an embodiment of the present disclosure, the first conductive connection member, the second conductive connection member, the third conductive connection member, and the fourth conductive connection member are copper bars.

In an embodiment of the present disclosure, the first conductive connection member includes a first lead-out copper bar and a first connection copper bar. The first lead-out copper bar, the first connection copper bar, and the first positive terminal of the circuit breaker are connected in sequence. The first lead-out copper bar partially extends to outside of the box body. The first connection copper bar is located inside the box body. The second conductive connection member includes a second lead-out copper bar and a second connection copper bar. The second lead-out copper bar, the second connection copper bar, and the second positive terminal of the circuit breaker are connected in sequence. The second lead-out copper bar partially extends to the outside of the box body. The second connection copper bar is located inside the box body. The third conductive connection member includes a third lead-out copper bar and a third connection copper bar. The third lead-out copper bar, the third connection copper bar, and the first negative terminal of the circuit breaker are connected in sequence. The third lead-out copper bar partially extends to the outside of the box body. The third connection copper bar is located inside the box body. The fourth conductive connection member includes a fourth lead-out copper bar and a fourth connection copper bar. The fourth lead-out copper bar, the fourth connection copper bar, and the second negative terminal of the circuit breaker are connected in sequence. The fourth lead-out copper bar partially extends to the outside of the box body. The fourth connection copper bar is located inside the box body.

In an embodiment of the present disclosure, the distribution box further includes a high voltage sampling unit (HVSU). The HVSU is connected between the third lead-out copper bar and the third connection copper bar, and is configured to stabilize a voltage.

In an embodiment of the present disclosure, the distribution box further includes a pre-charging circuit arranged inside the box body. The pre-charging circuit includes a pre-charging resistor and a pre-charging relay connected in sequence. A first end of the pre-charging resistor is connected with the first conductive connection member. A second end of the pre-charging resistor is connected with a first end of the pre-charging relay. A second end of the pre-charging relay is connected with the second conductive connection member.

According to a second aspect of the present disclosure, a battery pack is provided. The battery pack includes the distribution box in any of the above embodiments.

According to a third aspect of the present disclosure, a vehicle is provided. The vehicle includes the above battery pack.

According to the distribution box, the battery pack, and the vehicle provided in the embodiments of the present disclosure, in the distribution box of the present disclosure, the circuit breaker is used, which reduces a quantity of components and devices in the distribution box, reduces manufacturing costs, and further reduces heat generated inside the distribution box. Through use of the heat dissipation apparatus, heat dissipation of the components and devices in the distribution box can be accelerated through the heat dissipation opening, thereby increasing a service life of the components and devices.

### BRIEF DESCRIPTION OF THE DRAWINGS

To describe technical solutions of embodiments of the present disclosure more clearly, the accompanying drawings required for describing the embodiments are briefly described below. Apparently, the accompanying drawings in the following description show merely some embodiments of the present disclosure, and a person of ordinary skill in the art may still derive other accompanying drawings from the accompanying drawings without creative efforts.
FIG. 1 is a bottom view of a distribution box according to an embodiment of the present disclosure;
FIG. 2 is a schematic diagram of an internal structure of a distribution box according to an embodiment of the present disclosure;
FIG. 3 is an exploded view of a distribution box according to an embodiment of the present disclosure;
FIG. 4 is a schematic diagram of a linear type according to an embodiment of the present disclosure;
FIG. 5 is a schematic diagram of a linear + stepped type according to an embodiment of the present disclosure;
FIG. 6 is a schematic diagram of a stepped type according to an embodiment of the present disclosure;
FIG. 7 is a schematic diagram of a smooth curve type according to an embodiment of the present disclosure;
FIG. 8 is a schematic structural diagram of a battery pack according to an embodiment of the present disclosure; and
FIG. 9 is a schematic structural diagram of a vehicle according to an embodiment of the present disclosure.

### DETAILED DESCRIPTION

To make objectives, technical solutions, and advantages of the present disclosure more obvious, exemplary embodiments according to the present disclosure are described in detail below with reference to the accompanying drawings. Apparently, the described embodiments are merely some rather than all of the embodiments of the present disclosure. It should be understood that the present disclosure is not limited by the exemplary embodiments described herein. All other embodiments obtained by a person skilled in the art based on the embodiments described in the present disclosure without creative efforts shall fall within the protection scope of the present disclosure.

In the following description, a large number of specific details are given for providing a thorough understanding of the present disclosure. However, it is apparently for a person skilled in the art that the present disclosure may be implemented without one or more of the details. In other examples, to avoid confusion with the present disclosure, some well-known technical features in the art are not described.

It should be understood that the present disclosure can be implemented in different forms, and should not be construed as a limitation on the embodiments provided herein. Conversely, these embodiments are provided, so that the present disclosure is thorough and complete, and the scope of the present disclosure is completely conveyed to a person skilled in the art.

To thoroughly understand the present disclosure, a detailed structure is provided in the following description, to explain the technical solutions provided in the present disclosure. Optional embodiments of the present disclosure are described in detail as follows. However, in addition to these detailed descriptions, the present disclosure may further have other implementations.

Some implementations of the present disclosure are described in detail below with reference to the accompanying drawings. The following embodiments and features in the embodiments may be combined with each other in the case of no conflict.

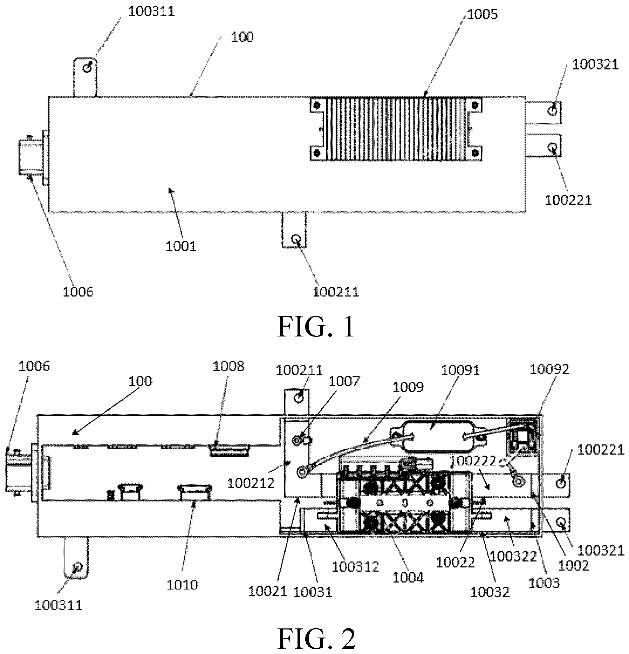

The present disclosure provides a distribution box. As shown in FIG. 1 and FIG. 2, a distribution box 100 includes a box body 1001, a positive circuit 1002, a negative circuit 1003, a circuit breaker 1004, and a heat dissipation apparatus 1005.

The positive circuit 1002 is arranged inside the box body 1001. The positive circuit 1002 includes a first conductive connection member 10021 and a second conductive connection member 10022.

The negative circuit 1003 is arranged inside the box body 1001. The negative circuit 1003 includes a third conductive connection member 10031 and a fourth conductive connection member 10032.

A first positive terminal of the circuit breaker 1004 is connected with an end of the first conductive connection member 10021. A second positive terminal of the circuit breaker 1004 is connected with an end of the second conductive connection member 10022. A first negative terminal of the circuit breaker 1004 is connected with an end of the third conductive connection member 10031. A second negative terminal of the circuit breaker 1004 is connected with an end of the fourth conductive connection member 10032.

It should be noted that, the circuit breaker 1004 can effectively control and protect a circuit. When a current flows through the circuit breaker 1004, the circuit breaker 1004 may automatically open the circuit if a failure such as an overload or a short circuit occurs, to protect a circuit element from damage as a result of an overcurrent. In addition, an original fuse and relay in the distribution box 100 are replaced with the circuit breaker 1004, which reduces a quantity of components and devices, and can reduce an amount of heat generated inside the distribution box 100.

The heat dissipation apparatus 1005 is arranged at a heat dissipation opening of the box body 1001. The heat dissipation opening is provided on a side of the box body 1001 corresponding to positions where the circuit breaker 1004 is connected to the positive circuit 1002 and the negative circuit 1003.

In an example, the heat dissipation apparatus 1005 can take away heat in the distribution box 100 through the heat dissipation opening. Specifically, the heat dissipation apparatus 1005 may be in contact with the above connection positions through a thermally conductive but non-conductive component, to transfer heat of the first conductive connection member 10021, the second conductive connection member 10022, the third conductive connection member 10031, the fourth conductive connection member 10032, and the circuit breaker 1004 to the heat dissipation apparatus 1005.

In another example, the distribution box 100 further includes a low voltage connector 1006 connected with an entire vehicle, to control a battery pack and provide stable and reliable power supply distribution.

In the distribution box 100 of the embodiments of the present disclosure, the circuit breaker 1004 is used, which reduces a quantity of components and devices in the distribution box 100, reduces manufacturing costs, and reduces the heat generated inside the distribution box 100. Through use of the heat dissipation apparatus 1005, heat dissipation of the components and devices in the distribution box 100 can be accelerated through the heat dissipation opening, thereby increasing a service life of the components and devices.

In some embodiments, the heat dissipation apparatus 1005 includes a first thermally conductive adhesive 10051 and a heat dissipation module 10052. A first side surface of the first thermally conductive adhesive 10051 is thermally connected with the first conductive connection member 10021, the second conductive connection member 10022, the third conductive connection member 10031, and the fourth conductive connection member 10032. A second side surface of the first thermally conductive adhesive 10051 is thermally connected with the heat dissipation module 10052.

Specifically, the first thermally conductive adhesive 10051 transfers the heat of the first conductive connection member 10021, the second conductive connection member 10022, the third conductive connection member 10031, and the fourth conductive connection member 10032 to the heat dissipation module 10052. The heat dissipation module 10052 quickly takes away the heat from the first thermally conductive adhesive 10051.

In this embodiment, the first thermally conductive adhesive 10051 and the heat dissipation module 10052 can effectively lower a temperature inside the distribution box 100, to ensure that the components and devices operate within a normal operation temperature range, thereby prolonging the service life of the components and devices, and improving stability.

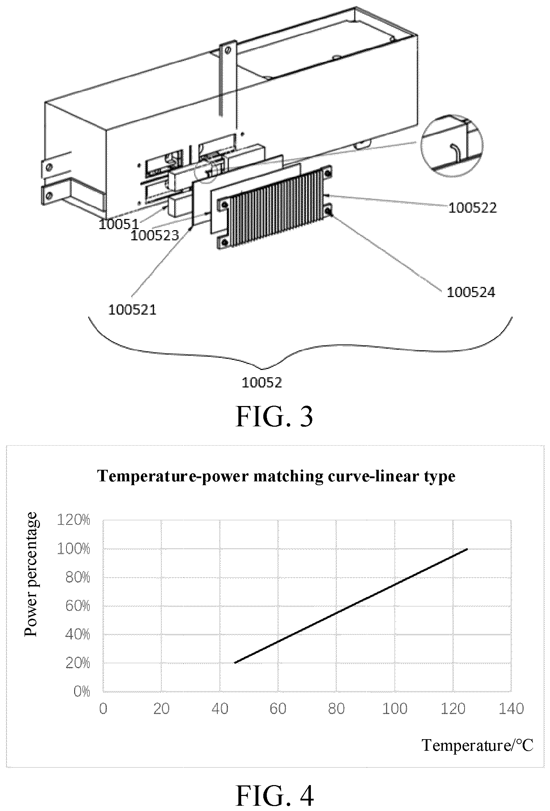

In some embodiments, as shown in FIG. 3, a heat dissipation module 10052 includes a semiconductor chilling plate 100521 and a heat dissipation sheet 100522. A second side surface of a first thermally conductive adhesive 10051 is thermally connected with a first side surface of the semiconductor chilling plate 100521. A second side surface of the semiconductor chilling plate 100521 is thermally connected with the heat dissipation sheet 100522.

The semiconductor chilling plate 100521 shown in FIG. 3 may be connected to a battery management system (BMS) 1008 through a wire.

It should be noted that, the semiconductor chilling plate 100521 has characteristics such as no vibration and noise, no need for a refrigerant, real-time temperature control, and a large controllable temperature difference range. The semiconductor chilling plate 100521 is a tool for heat transfer. When a current flows through a thermocouple formed by joining a piece of N-type semiconductor material and a piece of P-type semiconductor material, heat transfer occurs between two ends, and heat is transferred from one end to the other end, thereby generating a temperature difference to form a cold end and a hot end, and taking away the heat inside the distribution box 100.

Specifically, the terminals of the circuit breaker 1004 may be designed to face the semiconductor chilling plate 100521, to facilitate arrangement of the first thermally conductive adhesive 10051.

In an example, the box body 1001 of the distribution box 100 may have an opening at a bottom, to form the heat dissipation opening. In addition, the positions where the circuit breaker 1004 is connected to the positive circuit 1002 and the negative circuit 1003 are arranged at the bottom of the distribution box 100. The semiconductor chilling plate 100521 is also correspondingly arranged at the bottom of the distribution box 100.

Specifically, the heat dissipation module 10052 further includes a second thermally conductive adhesive 100523. The second thermally conductive adhesive 100523 is fixed between the semiconductor chilling plate 100521 and the heat dissipation sheet 100522.

In this embodiment, the heat inside the distribution box 100 can be efficiently transferred from the semiconductor chilling plate 100521 to the heat dissipation sheet 100522 through the semiconductor chilling plate 100521 and the heat dissipation sheet 100522, to ensure that the components and devices operate within a suitable temperature range. In addition, in the manner of fixing the thermally conductive adhesive, a volume of the distribution box 100 is reduced, and a space is saved.

In some embodiments, as shown in FIG. 2, the distribution box 100 further includes a temperature sensor 1007 and a BMS 1008.

The temperature sensor 1007 is arranged on a surface of the first conductive connection member 10021, and is configured to collect a temperature of the first conductive connection member 10021.

The BMS 1008 is connected with the temperature sensor 1007 and the semiconductor chilling plate 100521, and is configured to control on/off of a current in the semiconductor chilling plate 100521 based on a collection result of the temperature sensor 1007.

In an example, when an overcurrent occurs in the distribution box 100, the first conductive connection member 10021 generates heat. The temperature sensor 1007 collects the temperature on the first conductive connection member 10021 and sends the temperature to the BMS 1008. When it is detected that the collected temperature is greater than a preset temperature, the BMS 1008 supplies power to the semiconductor chilling plate 100521. The semiconductor chilling plate 100521 starts operating, and takes away the heat inside the distribution box 100.

In another example, the distribution box 100 may further include a battery management controller (BMC). The BMC is connected with the BMS and the semiconductor chilling plate 100521, and is configured to control the on/off of the current in the semiconductor chilling plate 100521 based on information provided by the BMS.

Due to the characteristics of easy and precise control of the semiconductor chilling plate 100521, an operation strategy may be set in the BMS, so that the temperature matches a heat dissipation power, rather than operating at a full power immediately when a set temperature is reached, which can reduce energy consumption.

Specifically, the operation strategy may be set to have a linear type, a linear + stepped type, a stepped type, and a smooth curve type.

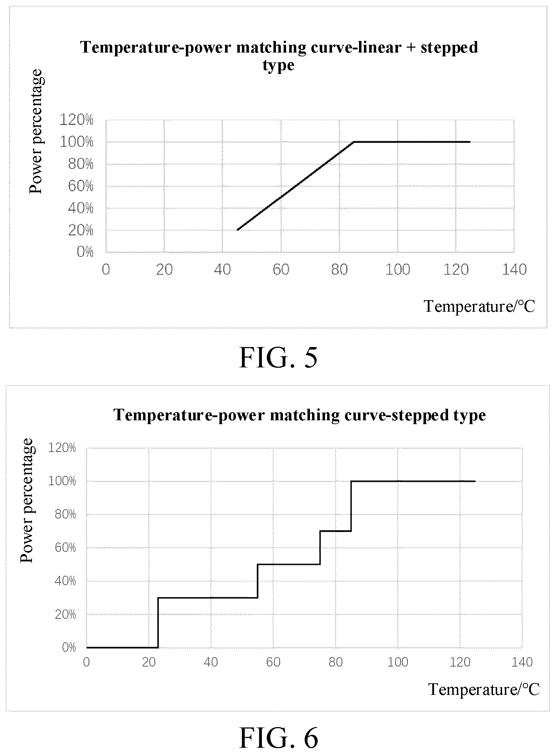

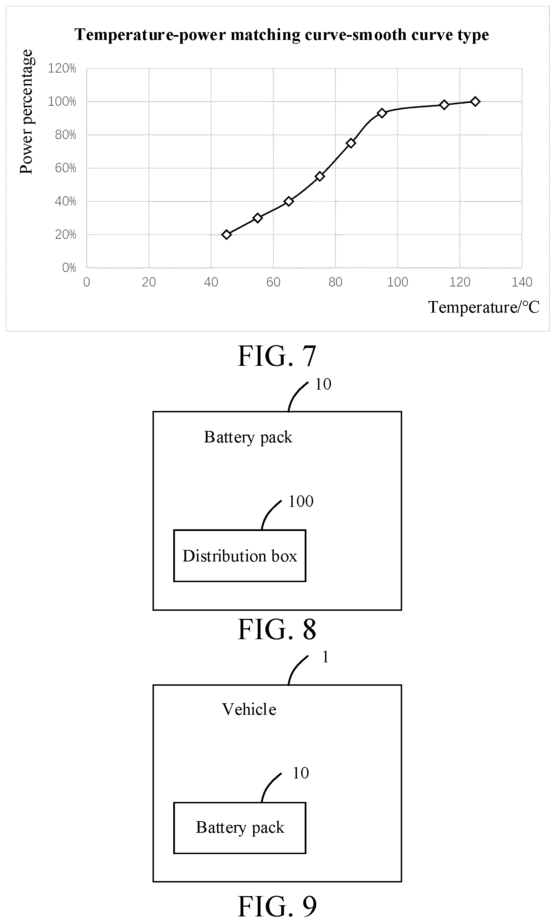

In an example, as shown in FIG. 4, a heat dissipation power of a linear type operation strategy is directly proportional to a temperature, which is relatively simple, so that the BMS has a small operating pressure. However, the strategy has a single control strategy. When the temperature rises to an excessively high level, a semiconductor cannot operate at a full power, which has significant impact on a heat dissipation effect. As shown in FIG. 5, the linear type operation strategy may be changed to a linear + stepped type operation strategy by adding a high temperature control point to the linear type operation strategy. The strategy can achieve linear control of the power before the high temperature control point, and achieve full-power operation of the semiconductor chilling plate 100521 after the high temperature control point. As shown in FIG. 6, the linear + stepped type operation strategy may be changed to a stepped type operation strategy by adding multiple temperature control points to the linear + stepped type operation strategy. The strategy is more sensitive to the temperature, is closer to a heating curve of the distribution box, and has a more ideal heat dissipation effect. As shown in FIG. 7, temperature control points are further increased. More temperature control points indicate a smoother curve, that is, a strategy closer to an actual heating curve indicates a more ideal heat dissipation effect. However, the smooth curve type operation strategy is difficult, has a high requirement for the BMS, and requires a large amount of experimental data for fitting.

In this embodiment, the semiconductor chilling plate 100521 can be precisely controlled through the BMS 1008 and the temperature sensor 1007, so that the distribution box 100 is in an optimal operation state, thereby increasing the service life of the components and devices.

In some embodiments, as shown in FIG. 3, the semiconductor chilling plate 100521 and the heat dissipation sheet 100522 are fixed to an outer side of the box body 1001 through bolts 100524.

In an example, 4 bolts 100524 may be arranged, and are respectively located at four corners of the heat dissipation sheet 100522.

In some embodiments, the heat dissipation module 10052 is one of a liquid cooling plate and a phase change material.

It should be noted that, the liquid cooling plate is a device that utilizes a liquid cooling medium (which is usually water or another cooling liquid) to absorb and dissipate heat. In the liquid cooling plate, a cooling liquid flows through a thermally conductive material or pipe, absorbs heat, and then flows to a heat sink. The heat is transferred to a surrounding environment through the heat sink. The phase change material is a material that can absorb or release a large amount of heat when a temperature changes. The phase change material usually exists in a solid state. When the temperature rises, the phase change material absorbs heat, and undergoes a phase transition, to store the heat. When the temperature falls, the phase change material releases the stored heat.

In this embodiment, the temperature inside the distribution box 100 can be effectively reduced through the liquid cooling plate or the phase change material, thereby improving a heat dissipation effect of the heat dissipation module 10052.

In some embodiments, the first conductive connection member 10021, the second conductive connection member 10022, the third conductive connection member 10031, and the fourth conductive connection member 10032 are copper bars.

Specifically, the first conductive connection member 10021 includes a first lead-out copper bar 100211 and a first connection copper bar 100212. The first lead-out copper bar, the first connection copper bar, and the first positive terminal of the circuit breaker 1004 are connected in sequence. The first lead-out copper bar partially extends to outside of the box body 1001. The first connection copper bar is located inside the box body 1001. The second conductive connection member 10022 includes a second lead-out copper bar 100221 and a second connection copper bar 100222. The second lead-out copper bar, the second connection copper bar, and the second positive terminal of the circuit breaker 1004 are connected in sequence. The second lead-out copper bar partially extends to the outside of the box body 1001. The second connection copper bar is located inside the box body 1001. The third conductive connection member 10031 includes a third lead-out copper bar 100311 and a third connection copper bar 100312. The third lead-out copper bar, the third connection copper bar, and the first negative terminal of the circuit breaker 1004 are connected in sequence. The third lead-out copper bar partially extends to the outside of the box body 1001. The third connection copper bar is located inside the box body 1001. The fourth conductive connection member 10032 includes a fourth lead-out copper bar 100321 and a fourth connection copper bar 100322. The fourth lead-out copper bar, the fourth connection copper bar, and the second negative terminal of the circuit breaker 1004 are connected in sequence. The fourth lead-out copper bar partially extends to the outside of the box body 1001. The fourth connection copper bar is located inside the box body 1001.

In this embodiment, copper has excellent thermal conductivity, which can quickly transfer heat and facilitates heat dissipation.

In some embodiments, as shown in FIG. 2, the distribution box 100 further includes a pre-charging circuit 1009 arranged inside the box body 1001. The pre-charging circuit 1009 includes a pre-charging resistor 10091 and a pre-charging relay 10092 connected in sequence. A first end of the pre-charging resistor 10091 is connected with the first conductive connection member 10021. A second end of the pre-charging resistor 10091 is connected with a first end of the pre-charging relay 10092. A second end of the pre-charging relay 10092 is connected with the second conductive connection member 10022.

In this embodiment, a pre-charging function can be provided through the pre-charging circuit 1009 when the distribution box 100 is started, thereby controlling a rising speed of a current, protecting the circuit from being damaged by an excessively high starting current, and preventing a temperature rise of the component as a result of an overcurrent in the circuit.

In some embodiments, the distribution box 100 further includes a high voltage sampling unit (HVSU) 1010. The HVSU is connected between the third lead-out copper bar and the third connection copper bar, and is configured to stabilize a voltage.

In this embodiment, the HVSU 1010 can monitor an output voltage in real time, and adjust the output voltage as required, to ensure a stable voltage output.

In addition, the present disclosure provides a battery pack. As shown in FIG. 8, a battery pack 10 includes the distribution box 100 in any of the above embodiments.

The battery pack 10 of this embodiment of the present disclosure can reduce production and manufacturing costs of the battery pack 10 and improve heat dissipation efficiency of the battery pack 10 through use of the distribution box 100.

In addition, the present disclosure provides a vehicle 1. As shown in FIG. 9, the vehicle 1 includes the above battery pack 10.

In the vehicle 1 of this embodiment of the present disclosure, through use of the battery pack 10, production and manufacturing costs of the vehicle can be reduced, and heat dissipation efficiency can be improved.

Although exemplary embodiments have been described herein with reference to the accompanying drawings, it should be understood that the above exemplary embodiments are merely exemplary, and are not intended to limit the scope of the present disclosure. A person of ordinary skill in the art may make various changes and modifications to the present disclosure without departing from the scope and spirit of the present disclosure. All such changes and modifications are intended to be included within the scope of the present disclosure as claimed in the appended claims.

In the several embodiments provided in the present disclosure, it should be understood that the disclosed device may be implemented in another manner. For example, the device embodiment described above is merely exemplary. For example, division into the units is merely function division, and may be another division during actual implementation. For example, multiple units or assemblies may be combined or integrated into another device, or some features may be ignored or not performed.

In the specification provided herein, a large number of specific details are described. However, it can be understood that the embodiments of the present disclosure may be practiced without these specific details. In some examples, well-known structures and technologies are not shown in detail, so as not to obscure the understanding of the specification.

Similarly, it should be understood that, to simply the present disclosure and assist in understanding one or more of the aspects of the present disclosure, in the description of the exemplary embodiments of the present disclosure, the features of the present disclosure are sometimes grouped together into a single embodiment, figure, or a description thereof. The claimed present disclosure claims more features than those explicitly recorded in each claim. More precisely, as reflected in the corresponding claims, the present disclosure is characterized in that a corresponding technical problem may be resolved using features less than all features of a single embodiment of a disclosure. Therefore, a claim that follows a specific implementation is hereby explicitly incorporated into the specific implementation. Each claim serves as a separate embodiment of the present disclosure.

A person skilled in the art may understand that except that features are mutually exclusive, all features disclosed in the specification (including the accompanying claims, abstract, and drawings) and all units of any device disclosed in such a way may be combined in any combination. Unless otherwise explicitly stated, each feature disclosed in the specification (including the accompanying claims, abstract, and drawings) may be replaced with an alternative feature that provides a same, equivalent, or similar purpose.

In addition, a person skilled in the art can understand that although some embodiments described herein include some features included in other embodiments rather than other features, a combination of features of different embodiments is meant to be within the scope of the present disclosure and form different embodiments. For example, in the claims, any of the claimed embodiments may be used in any combination.

It should be noted that the above embodiments are descriptions of the present disclosure rather than limitations on the present disclosure, and a person skilled in the art may design alternative embodiments without departing from the scope of the appended claims. In the claims, any reference symbol between parentheses should not be constructed as a limitation on the claims. The word "include" does not exclude existence of elements or steps that are not listed in the claims. The word "a/an" or "one" before an element does not exclude existence of multiple such element. The present disclosure may be implemented by means of hardware including multiple different elements and a properly programmed computer. In the claims listing units of multiple apparatuses, some of these apparatuses may be specifically embodied through a same hardware item. The usage of words such as first, second, and third does not indicate any order. These words may be construed as names.

The above descriptions are merely specific implementations of the present disclosure or descriptions of specific implementations, and the protection scope of the present disclosure is not limited thereto. Any variation or substitution readily figured out by a person skilled in the art within the technical scope disclosed in the present disclosure shall fall within the protection scope of the present disclosure. The protection scope of the present disclosure shall be subject to the protection scope of the claims.

## Claims

1. A distribution box, comprising:
a box body;
a positive circuit, the positive circuit being arranged inside the box body, the positive circuit comprising a first conductive connection member and a second conductive connection member;
a negative circuit, the negative circuit being arranged inside the box body, the negative circuit comprising a third conductive connection member and a fourth conductive connection member;
a circuit breaker, a first positive terminal of the circuit breaker being connected with an end of the first conductive connection member, a second positive terminal of the circuit breaker being connected with an end of the second conductive connection member, a first negative terminal of the circuit breaker being connected with an end of the third conductive connection member, and a second negative terminal of the circuit breaker being connected with an end of the fourth conductive connection member; and
a heat dissipation apparatus, the heat dissipation apparatus being arranged at a heat dissipation opening of the box body,
wherein the heat dissipation opening is provided on a side of the box body corresponding to positions where the circuit breaker is connected to the positive circuit and the negative circuit.

2. The distribution box according to claim 1, wherein the heat dissipation apparatus comprises a first thermally conductive adhesive and a heat dissipation module;
a first side surface of the first thermally conductive adhesive is thermally connected with the first conductive connection member, the second conductive connection member, the third conductive connection member, and the fourth conductive connection member; and a second side surface of the first thermally conductive adhesive is thermally connected with the heat dissipation module.

3. The distribution box according to claim 2, wherein the heat dissipation module comprises a semiconductor chilling plate and a heat dissipation sheet;
the second side surface of the first thermally conductive adhesive is thermally connected with a first side surface of the semiconductor chilling plate; and a second side surface of the semiconductor chilling plate is thermally connected with the heat dissipation sheet.

4. The distribution box according to claim 3, wherein the heat dissipation module further comprises a second thermally conductive adhesive; and the second thermally conductive adhesive is fixed between the semiconductor chilling plate and the heat dissipation sheet.

5. The distribution box according to claim 3 or 4, further comprising:
a temperature sensor, the temperature sensor being arranged on a surface of the first conductive connection member, and configured to collect a temperature of the first conductive connection member; and
a battery management system (BMS), the battery management system being connected with the temperature sensor and the semiconductor chilling plate, and configured to control on/off of a current in the semiconductor chilling plate based on a collection result of the temperature sensor.

6. The distribution box according to claim 3, wherein the semiconductor chilling plate and the heat dissipation sheet are fixed to an outer side of the box body through bolts.

7. The distribution box according to claim 2, wherein the heat dissipation module is one of a liquid cooling plate and a phase change material.

8. The distribution box according to claim 1, wherein the first conductive connection member, the second conductive connection member, the third conductive connection member, and the fourth conductive connection member are copper bars.

9. The distribution box according to claim 8, wherein
the first conductive connection member comprises a first lead-out copper bar and a first connection copper bar; the first lead-out copper bar, the first connection copper bar, and the first positive terminal of the circuit breaker are connected in sequence; the first lead-out copper bar partially extends to outside of the box body; the first connection copper bar is located inside the box body;
the second conductive connection member comprises a second lead-out copper bar and a second connection copper bar; the second lead-out copper bar, the second connection copper bar, and the second positive terminal of the circuit breaker are connected in sequence; the second lead-out copper bar partially extends to the outside of the box body; the second connection copper bar is located inside the box body;
the third conductive connection member comprises a third lead-out copper bar and a third connection copper bar; the third lead-out copper bar, the third connection copper bar, and the first negative terminal of the circuit breaker are connected in sequence; the third lead-out copper bar partially extends to the outside of the box body; the third connection copper bar is located inside the box body;
the fourth conductive connection member comprises a fourth lead-out copper bar and a fourth connection copper bar; the fourth lead-out copper bar, the fourth connection copper bar, and the second negative terminal of the circuit breaker are connected in sequence; the fourth lead-out copper bar partially extends to the outside of the box body; and the fourth connection copper bar is located inside the box body.

10. The distribution box according to claim 9, further comprising: a high voltage sampling unit (HVSU), the high voltage sampling unit being connected between the third lead-out copper bar and the third connection copper bar, and configured to stabilize a voltage.

11. The distribution box according to claim 1, further comprising: a pre-charging circuit, the pre-charging circuit being arranged inside the box body, the pre-charging circuit comprising a pre-charging resistor and a pre-charging relay connected in sequence, a first end of the pre-charging resistor being connected with the first conductive connection member, a second end of the pre-charging resistor being connected with a first end of the pre-charging relay, and a second end of the pre-charging relay being connected with the second conductive connection member.

12. A battery pack, comprising the distribution box according to any of claims 1 to 11.

13. A vehicle, comprising the battery pack according to claim 12.
